# EUROPEAN PATENT SPECIFICATION

(11) **EP 3 887 999 B1**
(45) Date of publication and mention of the grant of the patent: **07.06.2023**
(21) Application number: 18849447.0
(22) Date of filing: 26.11.2018
(51) Int. Cl.: G06K 7/10

(54) **MACHINERY AND PROCESS FOR SCANNING A SLAB OF ROCK MATERIAL**
MASCHINE UND VERFAHREN ZUM ABTASTEN EINER STEINPLATTE
MACHINE ET PROCÉDÉ DE BALAYAGE D'UNE DALLE DE MATÉRIAU ROCHEUX

(43) Date of publication of application: 06.10.2021
(73) Proprietor: TAGLIO S.r.l., 12040 Piobesi d'Alba (CN) (IT)
(72) Inventor: CAPRA, Roberto, 12042 BRA (CN) (IT); CARATTO, Luigi, 12040 Piobesi d'Alba (CN) (IT)
(74) Representative: Vitillo, Giuseppe
(86) International application number: PCT/IT2018/000151
(87) International publication number: WO 2020/110156

(56) References cited:
- CN-A- 106 027 845
- US-A1- 2007 282 718
- D2 Technology: "Stonescan Iris V 2.3 Digital Scanner for Natural Stone", , 13 August 2017 (2017-08-13), page 1, XP054979578, Retrieved from the Internet: URL:https://www.youtube.com/watch?v=yeGFIs FZNH0 [retrieved on 2019-07-31] & D2 Technology: "Stonescan V2.3", , 31 December 2018 (2018-12-31), Retrieved from the Internet: URL:https://d2technology.com/ing/scanv.htm l [retrieved on 2019-07-31]

## Description

### Technical field

The invention relates to a machinery and to a process for scanning a slab of rock material, for example marble, stone, granite.

### Technological background

It is known Ii this field, to scan a slab of rock material, for example marble, in order to establish the following operations to be carried out on the slab, in particular cutting a portion of the slab, so as to obtain a manufactured article including said portion of rock material.

According to the prior art, said scanning takes place by projecting a light beam onto the slab, then a control unit creates an image of the slab by means of image capturing means.

US 2007/282718 A1 discloses a stone cutting and finishing management system for managing an inventory of stone slabs. The system includes a data management system with a database, an image station for creating a visual image of a slab from an inventory, each slab provided with a slab identifier, wherein the image and the identifier are stored in the database, a slab selection station with a visual display, a customer parts data file in the database including parts outline data, parts cutting data, and parts finishing data, a parts nesting system for displaying the parts outline data electronically on a selected slab image, a parts tagging station for projecting part outlines on the slab, wherein a part tag is attached to each part outline on the slab, a parts cutting station for cutting the parts from the slab in accordance with the data in the database, and a parts finishing station for providing a finishing process to the cut parts in accordance with the data in the database.

However, this type of systems is affected by some drawbacks.

One drawback lies in the fact that a same light beam, having the same physical features, hardly adjusts to the different types of material making up the slab, as, for instance, there are marbles with different colors and patterns; furthermore, a light beam designed for a particular type of marble is hardly suited for a granite slab. This is due to the fact that the chemical and/or morphological composition of the slabs can vary in a significant manner. Hence, when the image of the slab is processed, some types of material generate images with a low chromatic fidelity.

### Summary of the invention

An object of the invention is to provide a machinery and a process, which are able to solve this and other drawbacks of the prior art and which, at the same time, can be implemented in a simple and economic fashion.

According to the invention, this and other objects are reached by means of a machinery and a process according to the appended independent claims.

The appended claims are an integral part of the technical teaches provided in the following detailed description concerning the invention. In particular, the appended dependent claims define some preferred embodiments of the invention and describe optional technical features.

### Brief description of the drawings

Further features and advantages of the invention will be best understood upon perusal of the following detailed description, which is provided by way of example and is not limiting, with reference to the accompanying drawings, wherein:
- figure 1 is a perspective view of a machinery according to a particular embodiment of the invention;

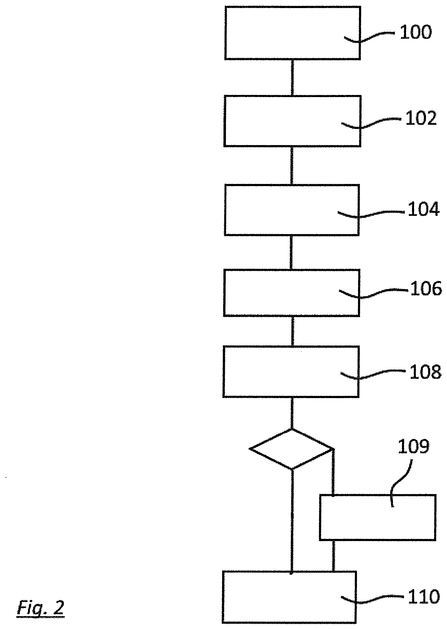

- figure 2 is a block diagram concerning a process according to a particular embodiment of the invention.

### Detailed description of the invention

The invention relates to a machinery for scanning a slab of rock material, comprising:
- a support 2 to support slab 4,
- a scanner 6 configured to capture an image of slab 4,
- a reader device configured to read an identifying element 8, in particular containing items of information or associated with items of information, applied on slab 4,
- a control unit adapted to produce, as an output, an image of slab 4.

The control unit is configured to receive from the reader device an input signal concerning identifying element 8 and, based on said input signal, to determine the parameters with which scanner 6 scans slab 4 and/or with which the control unit processes the output image of slab 4.

Support 2 preferably is adapted to support slab 4 in a substantially vertical position and, in the example shown herein, the slab is inclined by approximately 5° relative to a vertical plane. Support 2 preferably is a plane on which slab 4 is adapted to rest and, in particular, said plane is inclined (for example is inclined by 5° relative to the vertical) or vertical.

The machinery includes a support structure on which support 2 for slab 4 is fitted and said support structure is adapted to rest on a standing surface, for example the floor.

Scanner 6 preferably is mobile relative to support 2. Therefore, slab 4 is adapted to stand still on support 2 and the scanner moves relative to slab 4. Scanner 6 shown herein is adapted to slide relative to support 2, in particular horizontally. In the example shown herein, guide means, e.g. tracks, are fitted to support 2 so that scanner 6 can slide on them. According to a possible variant, scanner 6 is fixed and support 2 can optionally comprise means to move slab 4 relative to scanner 6. Scanner 6 preferably comprises linear video cameras (conveniently of the industrial type). Scanner 6 includes lighting means, preferably LEDs. Scanner 6, in particular of the mobile type, is preferably configured so as to detect an image of slab 4 which is not affected by the lighting conditions of the surrounding environment; for instance, scanner 6 has a casing which protects the video cameras from external light and is located close to slab 4 (e.g. a few centimeters of millimeters away), thus protecting it from the light of the surrounding environment.

Identifying element 8 conveniently is a barcode or a QR code and the reader device is adapted to read said barcode or QR code. Hence, in this case, the reader device is an optical reader. According to a possible variant of the invention, the reader device is an RFID reader adapted to read identifying element 8, which an RFID tag. In particular, identifying element 8 contains items of information on one or more among: the material of slab 4, the color of slab 4, the thickness of slab 4, the image scanning techniques, the post-scanning image processing techniques. Identifying element 8 contains or is associated with predefined items of information. Optionally, as an alternative, it 8 can be a sign or a graphic element.

Identifying element 8 is applied, for example through adhesive, on a face of slab 4, in particular on the face that is going to be analyzed by scanner 6. Optical references 12 are arranged, in the example, on the same face.

Therefore, the user places slab 4 on support 2 and the control unit, after the reader device has read identifying element 8, determines the parameters with which to emit the light beam on slab 4 and/or the image processing modes, so as to scan it through scanner 6 and produce, as an output, an image of slab 4. In this way, the process with which the images of slab 4 are captured and processed is quick, simple and allows users to obtain high-definition images, since, for every type of slab 4, the processing and the scanning are carried out according to ideal criteria.

The reader device is preferably portable, for example a "hand-held" scanner, in particular to read barcodes or QR codes, and it can be of a known type. The scanning of the image of slab 4 takes place after the reading of identifying element 8. According to a possible variant, the reader device is mounted on mobile scanner 6 or on support 2.

According to a possible embodiment, the parameters with which scanner 6 is adapted to capture the image of slab 4 include at least one between: intensity of a light beam emitted by a light source belonging to scanner 6, frequency of the light beam (e.g. white light, yellow light, red light, green light). The light source belonging to scanner 6 can be known. In addition or as an alternative, after the reading of identifying element 8, the control unit processes the image (image editing) according to predetermined logics which can be configured by a user. For example, in accordance with predetermined logics and in some operating conditions, the control unit does not alter the image obtained by scanner 6. This can happen, for example, if the image has a sufficiently high quality or if slab 4 is made of a predefined material, as indicated by identifying element 8.

First optical references 10, which are configured to be read by scanner 6, are preferably applied on support 2, which, in the example shown herein, is a plane. The control unit, based on this detection, is configured to carry out a correction of the output image of slab 4. Hence, scanner 6 sends a signal to the control unit when it detects a first optical reference 10. For example, the first optical references 10 are placed in known positions; therefore, when the first optical references 10 are detected, the control unit deforms the output image of slab 4 in response to said detection. The optical references 10, 12 basically are "fiducial markers" or "fiducial points". By means of the first optical references 10 it as advantageously possible to avoid or reduce distortions of the output image of slab 4, which, for example, can occur due to vibrations or anomalous movements of scanner 6, mechanical alignments, distortions caused by the lenses of scanner 6, etc.. Scanner 6 comprises means to detect the first optical references 10, which can be distinct from the scanning means used to obtain the image of slab 4.

Preferably, by means of second optical references 12 applied on slab 4 it is favorable possible to obtain a spatial positioning of slab 4 with reference to a reference system, for example a Cartesian system. Hence, the spatial orientation of slab 4 can be used in one or more following operations, such as for example the cutting of slab 4, in order to carry out these operations more precisely. Scanner 6 is adapted to detect the second optical references 12 applied on slab 4. The control unit is configured to determine the position of these second optical references 12 and, based on this position, to produce, as an output, the spatial positioning of slab 4 with reference to the reference system. The second optical references 12 are configured to be read by scanner 6 and can be applied on slab 4 by a user, for example through an adhesive. On slab 4 there preferably are three second optical references 12, which allow users to obtain a defined spatial orientation of slab 4 by placing references 12 on slab 4 in a causal manner. Hence, scanner 6 is adapted to obtain a first image of slab 4 and to detect the presence of optical references 10 and/or 12. The control unit, which is operatively connected to scanner 6, based on the items of information received, determines the position of optical references 10 and/or 12 and, hence, can act accordingly. The control unit is operatively connected to scanner 6 and to the reader device.

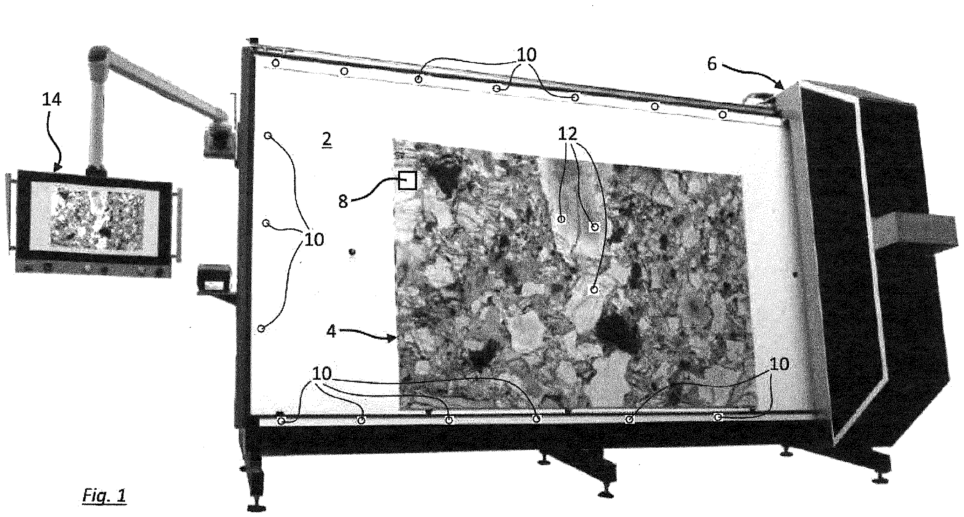

The first optical references 10 are conveniently aligned and are equally spaced apart from one another. In particular, they 10 can be aligned on a straight, broken or curved line. In particular, the first optical references 10 are located on (i.e. close to) at least part of the peripheral edges of support 2. For example, support 2 is a rectangular plane and the first optical references 10 can be located on a horizontal edge (in particular, the upper one). Scanner 6 shown in figure 1 is adapted to move along a trajectory that is parallel to the horizontal edge on which the first optical references 10 are mounted. According to a preferred variant of the invention, the first optical references 10 are located on all the perimeter edges of support 2 and, in particular, on the four edges of the rectangle formed by support plane 2.

In particular, the control unit is adapted to produce, as output image of slab 4, an image, for example in BMP format, and a DXF vector image, for example with three reference points and a zero point. The reference points derive from the position of the three second optical references 12. The "zero point" is an origin of a reference system. The image (e.g. BMP) and the DXF image can both show the three reference points and the zero point. This is advantageous for the subsequent cutting step, during which a control unit of a cutting machine uses a DXF file containing the reference points to obtain the positioning of slab 4, so as to cut said slab 4 in a quick and precise manner. Alternatively, in the more common case of cutting machines with shooting of slab 4 by means of a camera arranged above the plane where slabs 4 are processed, the presence, in the BMP image, of the three reference points facilitates the alignment of slab 4 on the processing plane.

Optionally, there is a screen 14 capable of showing data or items of information processed by the control unit, for example the output image of slab 4.

The invention further relates to a process for scanning a slab of rock material, comprising the steps of:
- providing a machinery according to any embodiment,
- applying 100 on slab 4 an identifying element 8 containing items of information,
- placing 102 slab 4 on support 2,
- reading 104 identifying element 8 and, based on said reading, determining 106 the parameters with which scanner 6 scans slab 4 and/or the parameters with which the control unit processes the output image of slab 4,
- capturing 108 an image of slab 4 through scanner 6,
- producing 110, as an output, an image of slab 4.

If it is necessary to process the image obtained by the scanner 6, there is the step of processing 109 the image in order to produce the output image of slab 4. Otherwise the image obtained by scanner 6 does not require further processing.

Optionally the control unit is adapted to receive commands by a user in order to obtain items of information on the process being carried out on slab 4. The control unit is optionally adapted to receive commands from a user in order to carry out the scanning process. Conveniently the control unit is adapted to store the output image of slab 4, or further items of information on slab 4, for example in a memory unit of the machinery or in a remote server.

The process preferably comprises the steps of:
- detecting first optical references 10 applied on support 2;
- based on this detection, carrying out a correction of the output image of slab 4.

The machinery and the process of the invention are conveniently included in a process for the production of an article made of rock material. The process includes the step of cutting slab 4 in order to manufacture the article and, in particular, there are the steps of:
- obtaining the spatial positioning of slab 4 in a reference system, wherein the spatial positioning of slab 4 is obtained by the slab scanning machinery,
- defining a cutting outline in said reference system along which to carry out the cutting of slab 4,
- cutting slab 4 based on the cutting outline.

In this case, a control unit of a cutting machine is adapted to receive the positioning of slab 4 previously obtained by the machinery according to the invention and, based on this positioning, the cutting outline is defined and the cut is carried out.

The process described above is conveniently carried out by the machinery according to the invention, wherein the control unit controls and coordinates the different steps and the structural elements, in accordance with what described above with reference to the machinery.

The cutting machine, which can be known, is coordinated by a control unit, which can be distinct from the control unit of the scanning machinery or can be the same control unit. In case of two different control units, they can be operatively connected to one another, for example through a wireless connection; or the user can store the output data produced by the control unit of the machinery, including the position of slab 4, and insert it in the control unit of the cutting machine, for example using a memory support or further known means.

The invention also relates to a computer program configured to have the scanning machinery carry out the scanning process and also to carry out the subsequent cutting of slab 4.

Naturally, the principle of the invention being set forth, embodiments and implementation details can be widely changed relative to what described above and shown in the drawings as a mere way of non-limiting example, without in this way going beyond the scope of protection provided by the accompanying claims.

## Claims

1. A machinery for scanning a slab (4) of rock material, comprising:
- a support (2) to support the slab (4),
- a scanner (6) configured to capture an image of the slab (4),
- a reader device configured to read an identifying element (8), in particular containing items of information, applied on the slab (4),
- a control unit adapted to produce, as an output, an image of the slab (4); wherein the control unit is configured to receive from the reader device an input signal concerning the identifying element (8) and, based on said input signal, to determine the parameters with which the scanner (6) scans the slab (4) and/or the parameters with which the control unit processes the output image of the slab (4);
**characterized in that** the scanner (6) is adapted to detect optical references (12) applied on the slab; and the control unit is configured to determine the position of said optical references (12) and, based on this position, to produce, as an output, the spatial positioning of the slab (4) with reference to a reference system.

2. Machinery according to claim 1, wherein the identifying element (8) is a barcode or a QR code and the reader device is adapted to read said barcode or QR code.

3. Machinery according to claim 1 or 2, wherein the parameters with which scanner (6) is adapted to capture the image of the slab (4) include at least one between: intensity of a light beam emitted by a light source belonging to the scanner (6), frequency of the light beam.

4. Machinery according to any one of the preceding claims, wherein on the support (2) there are applied further optical references (10) configured to be detected by the scanner (6) ;
wherein the control unit, based on this detection, is configured to carry out a correction of the output image of the slab (4).

5. Machinery according to any one of the preceding claims, wherein said optical references (12) are applied on the slab (4) .

6. Machinery according to any one of the preceding claims, wherein the scanner (6) is mobile relative to the support (2) .

7. A process for scanning a slab (4) of rock material, comprising the steps of:
- providing a machinery according to any one of the preceding claims,
- applying (100) on the slab (4) an identifying element (8), in particular containing items of information,
- placing (102) the slab (4) on the support (2),
- reading (104) the identifying element (8) and, based on said reading, determining (106) the parameters with which the scanner (6) scans the slab (4) and/or the parameters with which the control unit processes the output image of the slab (4),
- capturing (108) an image of the slab (4) through the scanner (6),
- producing (110), as an output, an image of the slab (4) ;
**characterized in that** said process further comprises the step of:
- detecting optical references (12) applied on the slab (4);
- determining the position of said optical references (12) and, based on this position, producing, as an output, a spatial positioning of the slab (4) in a reference system.

8. Process according to claim 7, wherein said optical references (12)are applied on the slab (4).

9. Process according to claim 7 or 8, comprising the steps of:
- detecting further optical references (10) applied on the support (2);
- based on this detection, carrying out a correction of the output image of the slab (4).

10. Process to produce an article made of a rock material, comprising the steps of:
- obtaining the spatial positioning of the slab (4) in the reference system, carrying out the process according to claim 8,
- defining a cutting outline in said reference system along which to carry out the cutting of the slab (4),
- cutting the slab (4) based on the cutting outline.

11. A computer program containing instructions to have the machinery carry out the process according to claims 7, 8 or 9 according to any one of the claims from 1 to 6.

12. Computer program containing instructions to have a cutting machine to cut the slab (4) carry out the process according to claim 10.

## Patentansprüche

1. Eine Maschine zum Erfassen einer Platte (4) aus Steinmaterial, umfassend:
- einen Träger (2) zum Tragen der Platte (4),
- einen Scanner (6), der ausgebildet ist, um ein Bild der Platte (4) zu erfassen,
- eine Lesevorrichtung, die ausgebildet ist, um ein auf der Platte (4) aufgebrachtes Identifizierungselement (8) zu lesen, das insbesondere Elemente von Informationen umfasst,
- eine Steuereinheit, die eingerichtet ist, um als Ausgabe ein Bild der Platte (4) zu erzeugen; wobei die Steuereinheit ausgebildet ist, um von der Lesevorrichtung ein sich auf das Identifizierungselement (8) beziehendes Eingangssignal zu empfangen und basierend auf das Eingangssignal die Parameter zu bestimmen, mit denen der Scanner (6) die Platte (4) erfasst und/oder die Parameter, mit denen die Steuereinheit die Ausgabe des Bilds der Platte (4) verarbeitet;
**dadurch gekennzeichnet, dass** der Scanner (6) eingerichtet ist, um auf der Platte (4) aufgebrachte optische Referenzen (12) zu erfassen; und die Steuereinheit ausgebildet ist, um die Position der optischen Referenzen (12) zu bestimmen und, basierend auf dieser Position, als Ausgabe die räumliche Positionierung der Platte (4) in Bezug auf ein Referenzsystem zu erzeugen.

2. Maschine nach Anspruch 1, wobei das Identifizierungselement (8) als ein Barcode oder QR Code ausgebildet und die Lesevorrichtung zum Lesen des Barcodes oder des QR Codes eingerichtet ist.

3. Maschine nach Anspruch 1 oder 2, wobei die Parameter, mit denen der Scanner (6) eingerichtet ist, um das Bild der Platte (4) zu erfassen, mindestens einen der folgenden Parameter umfassen: Intensität eines Lichtstrahls, der von einer zum Scanner (6) gehörenden Lichtquelle ausgesandt wird, Frequenz des Lichtstrahls.

4. Maschine nach einem der vorhergehenden Ansprüche, wobei auf dem Träger (2) weitere optische Referenzen (10) aufgebracht sind, die ausgebildet sind, um von dem Scanner (6) erfasst zu werden;
wobei die Steuereinheit auf Grundlage der Erfassung dazu ausgebildet ist, eine Korrektur der Ausgabe des Bilds der Platte (4) vorzunehmen.

5. Maschine nach einem der vorhergehenden Ansprüche, wobei die optischen Referenzen (12) auf der Platte (4) aufgebracht sind.

6. Maschine nach einem der vorhergehenden Ansprüche, wobei der Scanner (6) relativ zum Träger (2) beweglich ist.

7. Verfahren zum Erfassen einer Platte (4) aus Steinmaterial, das die folgenden Schritte umfasst:
- Bereitstellen einer Maschine nach einem der vorhergehenden Ansprüche,
- Aufbringen (100) eines Identifizierungselements (8) auf die Platte (4), das insbesondere Elemente von Informationen umfasst,
- Platzieren (102) der Platte (4) auf dem Träger (2),
- Lesen (104) des Identifizierungselements (8) und, basierend auf dem Lesen, bestimmen (106) der Parameter, mit denen der Scanner (6) die Platte (4) erfasst und/oder die Parameter mit denen die Steuereinheit die Ausgabe des Bilds der Platte (4) verarbeitet,
- Aufnehmen (108) eines Bilds der Platte (4) durch den Scanner (6),
- Erzeugen (110), als Ausgabe, eines Bilds der Platte (4);
**dadurch gekennzeichnet, dass** das Verfahren ferner die folgenden Schritte umfasst:
- Erfassen von optischen Referenzen (12), die auf der Platte (4) aufgebracht sind;
- Bestimmen der Position der optischen Referenzen (12) und, basierend auf dieser Position, Erzeugen einer räumlichen Position der Platte (4) in einem Referenzsystem als Ausgabe.

8. Verfahren nach Anspruch 7, wobei die optischen Referenzen (12) auf die Platte (4) aufgebracht werden.

9. Verfahren nach Anspruch 7 oder 8, umfassend die folgenden Schritte:
- Erfassen von weiteren optischen Referenzen (10), die auf dem Träger (2) aufgebracht sind;
- auf der Grundlage dieser Erfassung, Durchführen einer Korrektur der Ausgabe des Bilds der Platte (4).

10. Verfahren zur Herstellung eines Gegenstandes aus einem Steinmaterial, das die folgenden Schritte umfasst:
- Ermitteln der räumlichen Positionierung der Platte (4) im Referenzsystem, Ausführen des Verfahrens nach Anspruch 8,
- Festlegen einer Schnittkontur in dem besagten Referenzsystem, entlang der das Schneiden der Platte (4) durchgeführt werden soll,
- Schneiden der Platte (4) anhand der Schnittkontur.

11. Ein Computerprogramm, das Anweisungen umfasst, um die Maschine zu veranlassen, das Verfahren gemäß den Ansprüchen 7, 8 oder 9 nach einem der Ansprüche 1 bis 6 auszuführen.

12. Computerprogramm, das Anweisungen umfasst, um eine Schneidemaschine zum Schneiden der Platte (4) zu veranlassen, das Verfahren nach Anspruch 10 durchzuführen.

## Revendications

1. Machine pour scanner un bloc (4) de matériau rocheux, comprenant :
- un support (2) pour supporter le bloc (4),
- un dispositif de scannage (6) configuré pour capturer une image du bloc (4),
- un dispositif lecteur configuré pour lire un élément d'identification (8), contenant en particulier des morceaux d'informations, appliqué sur le bloc (4),
- une unité de commande adaptée pour produire, en tant que sortie, une image du bloc (4) ; dans laquelle l'unité de commande est configurée pour recevoir du dispositif lecteur un signal d'entrée concernant l'élément d'identification (8) et, sur la base dudit signal d'entrée, pour déterminer les paramètres avec lesquels le dispositif de scannage (6) scanne le bloc (4) et/ou les paramètres avec lesquels l'unité de commande traite l'image de sortie du bloc (4) ;
**caractérisée en ce que** le dispositif de scannage (6) est adapté pour détecter des références optiques (12) appliquées sur le bloc ; et l'unité de commande est configurée pour déterminer la position desdites références optiques (12) et, sur la base de cette position, pour produire, en tant que sortie, le positionnement spatial du bloc (4) avec référence à un référentiel.

2. Machine selon la revendication 1, dans laquelle l'élément d'identification (8) est un code-barres ou un code QR et le dispositif lecteur est adapté pour lire ledit code-barres ou ledit code QR.

3. Machine selon la revendication 1 ou 2, dans laquelle les paramètres avec lesquels le dispositif de scannage (6) est adapté pour capturer l'image du bloc (4) comprennent au moins l'une entre : une intensité d'un faisceau lumineux émis par une source lumineuse appartenant au dispositif de scannage (6), une fréquence du faisceau lumineux.

4. Machine selon l'une quelconque des revendications précédentes, dans laquelle, sur le support (2), sont appliquées d'autres références optiques (10) configurées pour être détectées par le dispositif de scannage (6) ;
dans laquelle l'unité de commande, sur la base de cette détection, est configurée pour effectuer une correction de l'image de sortie du bloc (4).

5. Machine selon l'une quelconque des revendications précédentes, dans laquelle lesdites références optiques (12) sont appliquées sur le bloc (4).

6. Machine selon l'une quelconque des revendications précédentes, dans laquelle le dispositif de scannage (6) est mobile par rapport au support (2).

7. Procédé de scannage d'un bloc (4) de matériau rocheux, comprenant les étapes consistant à :
- fournir une machine selon l'une quelconque des revendications précédentes,
- appliquer (100) sur le bloc (4) un élément d'identification (8), contenant en particulier des morceaux d'informations,
- placer (102) le bloc (4) sur le support (2),
- lire (104) l'élément d'identification (8) et, sur la base de ladite lecture, déterminer (106) les paramètres avec lesquels le dispositif de scannage (6) scanne le bloc (4) et/ou les paramètres avec lesquels l'unité de commande traite l'image de sortie du bloc (4),
- capturer (108) une image du bloc (4) par l'intermédiaire du dispositif de scannage (6),
- produire (110), en tant que sortie, une image de du bloc (4) ;
**caractérisé en ce que** ledit procédé comprend en outre l'étape consistant à :
- détecter des références optiques (12) appliquées sur le bloc (4) ;
- déterminer la position desdites références optiques (12) et, sur la base de cette position, produire, en tant que sortie, un positionnement spatial du bloc (4) dans un référentiel.

8. Procédé selon la revendication 7, dans lequel lesdites références optiques (12) sont appliquées sur le bloc (4).

9. Procédé selon la revendication 7 ou 8, comprenant les étapes consistant à :
- détecter d'autres références optiques (10) appliquées sur le support (2) ;
- sur la base de cette détection, effectuer une correction de l'image de sortie du bloc (4).

10. Procédé de production d'un article constitué d'un matériau rocheux, comprenant les étapes consistant à :
- obtenir le positionnement spatial du bloc (4) dans le référentiel, effectuer le procédé selon la revendication 8,
- définir un contour de découpe dans ledit référentiel le long duquel effectuer la découpe du bloc (4),
- découper le bloc (4) sur la base du contour de découpe.

11. Programme informatique contenant des instructions pour amener la machine selon l'une quelconque des revendications 1 à 6 à mettre en oeuvre le procédé selon les revendications 7, 8 ou 9.

12. Programme informatique contenant des instructions pour amener une machine de découpe à découper le bloc (4) en mettant en oeuvre le procédé selon la revendication 10.
